# EUROPÄISCHE PATENTANMELDUNG

(11) **EP 1 936 266 A2**
(43) Veröffentlichungstag der Anmeldung: **25.06.2008**
(21) Anmeldenummer: 07023012.3
(22) Anmeldetag: 17.12.2002
(51) Int. Cl.: F22B 1/28

(54) **Vorrichtung zum Erhitzen einer Flüssigkeit und Kaffeemaschine**

(30) Priorität: 20.12.2001 DE 20120611 U
(62) Teilanmeldung aus: 02028286.9
(71) Anmelder: Eichenauer Heizelemente GmbH & Co. KG, 76870 Kandel (DE)
(72) Erfinder: Kitt, Rudi, 76863 Herxheim-Hayna (DE); Kornisch, Fridolin, 76865 Rohrbach (DE); Höfer, Edwin, 76756 Bellheim (DE)
(74) Vertreter: Lempert, Jost

(57) **Zusammenfassung**

Eine Vorrichtung sieht zur Erhitzung der Flüssigkeit in erfindungsgemäßer Weise vor, dass die Heizeinrichtung mindestens zwei Heizkörper aufweist, die in gut wärmeleitender Verbindung mit mindestens einem Dampfrohr stehen.

## Beschreibung

Die Erfindung betrifft eine Vorrichtung zum Erhitzen einer Flüssigkeit mit mindestens einem flüssigkeitsführendem Rohr und einer gut wärmeleitend mit diesem verbundenen elektrischen Heizeinrichtung sowie eine Kaffeemaschine mit einer solchen Heizvorrichtung.

Das Erhitzen der Flüssigkeit kann bis zu einer gewünschten Temperatur unterhalb des Siedepunktes desselben, oder zur Dampferzeugung bis oberhalb des Siedepunktes erfolgen. Dampferzeuger finden insbesondere in Dampfsaugern ihre Anwendung. Die Funktionsweise eines solchen Gerätes ist beispielsweise in der EP 0 684 006 näher erläutert. Denkbar sind jedoch auch andere Anwendungsgebiete, wie beispielsweise in Espressomaschinen, Bügeleisen oder ähnlichen dampfbetriebenen Haushaltsgeräten.

Zu diesem Zweck sind Heizsysteme für Dampferzeuger bekannt, die als Druckgussteil hergestellt sind. Dabei ist das Druckgussteil so ausgestaltet, dass zwischen einer äußeren und einer inneren Zylinderwand aus Aluminium ein Stahlheizkörper wendelartig geführt und eingegossen ist. An einer Stirnseite der Zylinderanordnung sind zwei Öffnungen für den Wassereinlass und den Dampfaustritt vorgesehen. Der gebildete Topf ist innen durch eine in Richtung der Zylinderachse verlaufende Zwischenwand in zwei Kammern geteilt. Die Zwischenwand ist dabei so angeordnet, dass die eine Kammer mit der Wassereinlassöffnung und die andere Kammer mit der Dampfaustrittsöffnung in Verbindung steht. Die Zwischenwand endet an dem den Öffnungen gegenüberliegenden Ende der Anordnung einige Millimeter vor Erreichen der durch den äußeren Rand der Zylinderwand aufgespannten kreisförmigen Ebene.

Verschlossen ist die den Öffnungen gegenüberliegende Stirnseite mit einem Deckel unter Zwischenlage zweier O-Ringe, so dass aufgrund der Belassung eines Spalts zwischen Zwischenwand und Deckel ein Durchlass von der einen Kammer zur anderen Kammer geschaffen ist. Dabei wird eine Schraube in eine an die Zwischenwand angeformte Gewindeführung eingedreht und der Deckel zusätzlich noch mit der Zylinderaußenwand verstemmt.

Nachteilig ist der hohe Material- und Fertigungsaufwand, der entsprechend hohe Stückkosten zur Folge hat.

Bekannt sind des weiteren Durchlauferhitzer beispielsweise aus Kaffeemaschinen, bei denen ein Heizkörper mit einem Durchflussrohr verlötet wird. Hierbei trachtet man jedoch, die Dampferzeugung durch das Vorsehen einer kleinen Kontaktfläche zwischen Heizkörper und Durchflussrohr und durch die damit verbundene allmähliche Erwärmung von Wasser über eine längere Strecke gerade zu vermeiden, da eine schnelle Dampferzeugung zu viel kaltes Wasser mit sich reißen und die Brühtemperatur absenken würde.

Aus der DE 199 45 577 ist weiterhin ein Durchlauferhitzer für eine Espressomaschine bekannt. Auch hier ist ein Heizkörper aus Aluminium mit einem Durchflussrohr aus Aluminium verlötet. Im Gegensatz zum vorstehend beschriebenen Durchlauferhitzer einer Kaffeemaschine wird hier zwar Dampf erzeugt, jedoch bedingt durch die geringe Leistung des Heizkörpers nicht in einer Menge und nicht mit einem Druck, wie sie bei einer Anwendung in Dampfsaugern erforderlich sind.

Eine einfache Erhöhung der Heizleistung würde zu einer Überhitzung des Heizkörpers führen. Darüber hinaus ist ein Durchflussrohr in einer bei Espressomaschinen verwendeten Länge in einem Dampfsauger nicht unterzubringen.

Wie aus der DE-OS 22 18 796 bekannt ist, können Durchlauferhitzer auch als einstückige Strangpressprofile ausgeführt sein. Für die dort gezeigten Ausführungsformen ergeben sich die vorstehend aufgezeigten Nachteile in gleicher Weise.

Der Erfindung liegt daher die Aufgabe zugrunde, unter Vermeidung der angesprochenen Nachteile eine Vorrichtung zum Erhitzen von Flüssigkeit und eine Kaffeemaschine zu schaffen, die wesentlich einfacher und kostengünstiger herzustellen sind; auch soll die Vorrichtung bei hoher Heizleistung in einem begrenzten zur Verfügung stehenden Raum unterbringbar sein.

Diese Aufgabe wird erfindungsgemäß durch eine Vorrichtung und eine Kaffeemaschine der gattungsgemäßen Arten gelöst, bei denen die Heizeinrichtung mindestens zwei Heizkörper aufweist, dass die Heizkörper Rohrheizkörper sind und dass die Rohrheizkörper in gut wärmeleitender Verbindung mit mindestens einem flüssigkeitsführenden Rohr stehen.

Das flüssigkeitsführende Rohr besteht vorzugsweise aus Edelstahl, kann aber auch aus anderem Metall wie Aluminium oder Aluminiumlegierung bestehen. Edelstahl hat den Vorteil, dass Kalkablagerungen aufgrund der Temperaturänderungen wieder abplatzen uns so fortgeschwemmt werden können. Die Heizkörper bestehen vorzugsweise aus Aluminium oder einer Aluminiumlegierung, da solche Materialien die erforderlichen günstigen Wärmeleiteigenschaften aufweisen. Rohr und Heizkörper stehen bevorzugterweise längsseitig in direkter wärmeleitender Verbindung miteinander, wobei aufgrund der konturenangepassten Kontaktflächen von Heizkörpern und Dampfrohr eine möglichst große Wärmeübergangsfläche geschaffen ist.

Während in einer bevorzugten Ausgestaltung vorgesehen ist, dass die Kontaktflächen von Heizkörpern und Dampfrohr im wesentlichen eben ausgebildet sind, sieht eine äußerst bevorzugte Ausgestaltung vor, dass die Kontaktflächen des mindestens einen Rohrs konkav und die Kontaktflächen der Heizkörper entsprechend konvex ausgebildet sind. Dabei können die Kontaktflächen von Rohr und Heizkörper kontinuierlich bogenförmig oder aber auch winklig mit ebenen Wandbereichen ausgebildet sein, so dass sich die Konkavität bzw. Konvexität alleine durch den in der Regel stumpfen Winkel zwischen ebenen Wandbereichen ergibt.

In bevorzugter Weise ist vorgesehen, dass das Verhältnis vom beheizten Umfang zum gesamten Umfang des wasserführenden Rohres größer als 0,6 höchst vorzugsweise größer als 0,7 ist. Auch kann in weiterer oder alternaiver Weise vorgesehen sein, dass das Verhältnis des beheizten Umfanges in mm zur Querschnittsfläche in mm² des wasserführenden Rohres größer als 0,4 äußerst vorzugsweise größer als 0,5 ist.

Eine weitere bevorzugte Ausgestaltung der Erfindung sieht vor, dass die spezifische Längenheizleistung größer 10 W/mm vorzugsweise größer 19 W/mm ist. Letzteres gilt insbesondere bei einem wasserführendem Rohr aus Edelstahl.

Durch die erfindungsgemäße große Wärmeübergangsfläche kann eine große Wärmemenge auf ein relativ kleines zu beheizendes Volumen übertragen werden und damit eine schnelle Aufheizzeit erreicht werden.

In bevorzugter Ausgestaltung kann ein im Querschnitt rundes Aluminiumrohr im Abschnitt des Kontaktes mit den Heizkörpern so abgeflacht sein, dass ebene Kontaktflächen entstehen. Bei Verwendung von zwei Heizkörpern entsteht so ein Flachrohr als medienführendes Rohr mit zwei geraden, parallelen Seitenwänden. Alternative Ausgestaltungen der Erfindung sehen die Verwendung von drei oder vier gemeinsam mit einem Dampfrohr verbundenen Heizkörpern vor. Bei Verwendung von drei Heizkörpern entsteht so ein medienführendes Rohr mit im wesentlichen dreieckigen Querschnitt, bei vier Heizkörpern weist das Dampfrohr teilweise einen rechteckförmigen Querschnitt auf.

Durch die Verwendung von mindestens zwei direkt mit dem Dampfrohr verbundenen Heizkörpern ist es aufgrund der deutlich vergrößerten Wärmeübergangsfläche im Gegensatz zu den zum Stand der Technik zu rechnenden Heizsystemen möglich, eine vergrößerte Gesamtheizleistung vorzusehen und damit das Wasser im Dampfrohr auf kurzer Strecke so stark zu erhitzen, dass es in den dampfförmigen Zustand übergeht. Dabei ist es möglich, Heizleistungen von 1 kW und mehr pro 100 mm Dampfrohrlänge zu übertragen.

Zur Verbesserung der Heizleistung ist nach einer äußerst bevorzugter Ausgestaltung vorgesehen, die Wärmeabgabefläche durch innerhalb des Dampfrohres vorgesehene Zwischenwandungen noch zu erhöhen. Nach einer weiteren bevorzugten Ausgestaltung ist das Dampfrohr zwecks einer konstruktiv einfachen Schaffung einer solchen Geometrie als Strangpressprofil ausgebildet.

Um die Heizrohre effektiv und über eine möglichst große Fläche mit dem Dampfrohr in Kontakt bringen zu können, ist nach einer weiteren bevorzugten Ausgestaltung des erfindungsgemäßen Gegenstands vorgesehen, dass die Heizkörper zumindest im Bereich der Kontaktflächen einen trapezförmigen Querschnitt aufweisen. Bevorzugterweise ist dabei die längere der beiden Grundlinien des trapezförmigen Querschnitts mit dem Dampfrohr verbunden.

Darüber hinaus ist bevorzugterweise vorgesehen, den gesamten Dampferzeuger, d.h. das Dampfrohr mit den mindestens zwei Heizkörpern als einstückiges Strangpressprofil herzustellen. In diesem Fall ist der lichte Querschnitt der die Mäntel der Heizkörper bildenden Heizrohre nach dem Einbringen der Heizleiter und der diese umgebenden Isoliermasse in an sich bekannter Weise zu verringern, um die Isoliermasse zu verdichten. Aus einer solchen Ausgestaltung resultiert eine äußerst kompakte und insbesondere gegen äußere mechanische Einflüsse unempfindliche Verbindung von Heizkörpern und Dampfrohr.

Da gerade bei einem Flachrohr aufgrund der geringen Höhe des Querschnitts Probleme durch Kalkablagerungen auftreten können, die den Querschnitt noch zusätzlich verengen, ist zur Dampferzeugung bevorzugt kalkfreies oder kalkarmes Wasser einzusetzen. Dies kann durch Verwendung eines Filters, beispielsweise in Form einer vor dem Dampfrohr angeordneten Filterkartusche erreicht werden. Zusätzlich oder alternativ kann das Dampfrohr eine geeignete Innenbeschichtung, wie aus PTFE aufweisen.

Um die Temperatur des erfindungsgemäßen Heizsystems effektiv überwachen und im Falle einer Überhitzung das Gerät abschalten zu können, ist nach einer äußerst bevorzugten Ausgestaltung vorgesehen, im Bereich der Kontaktierung von Heizkörpern und Dampfrohr mindestens eine Lasche aus gut wärmeleitendem Material, vorzugsweise aus Aluminium oder einer Aluminiumlegierung anzubringen. Nach einer bevorzugten Ausgestaltung der Erfindung ist die Lasche mit den Heizkörpern und/oder dem Dampfrohr verlötet oder verschweißt (punktgeschweißt), um einen guten Wärmeübergang bei gleichzeitiger mechanischer Stabilität auf einfache Weise zu gewährleisten. An der Lasche ist vorzugsweise ein Temperaturregler befestigt.

Die Beschaltung der Heizkörper kann an die jeweiligen baulichen Gegebenheiten des das Heizsystem aufnehmenden Gerätes (Art der Spannungsversorgung, Typ und Größe der Spannungsquelle, etc.) angepasst werden. Bevorzugte Ausgestaltungen der Erfindung sehen eine Reihen- oder Parallelschaltung der Heizkörper vor. Nach einer äußerst bevorzugten Ausgestaltung erlaubt die Beschaltung dem Benutzer einen Wechsel zwischen einer Einzelschaltung, Reihenschaltung oder Parallelschaltung der Heizkörper, um so variabel auf nutzungsbedingte Anforderungen, wie benötigte Leistung oder den Grad der Verschmutzung, reagieren zu können.

Die Heizkörper sind weiterhin an ihren jeweiligen Enden vorzugsweise abgewinkelt ausgestaltet, so dass diese vom Dampfrohr weg frei in den Raum ragen. Auf diese Weise lassen sich die elektrischen Anschlüsse ohne weiteres anbringen.

Weitere Vorteile und Merkmale ergeben sich aus den Unteransprüchen und der folgenden Zeichnungsbeschreibung. Dabei zeigt bzw. zeigen:
- Fig. 1: eine Seitenansicht einer erfindungsgemäßen Heizvorrichtung mit zwei Heizkörpern;
- Fig. 2: einen Querschnitt entsprechend der Linie A-A der Seitenansicht;
- Fig. 3: einen Querschnitt durch eine alternative Heizvorrichtung mit drei Heizkörpern;
- Fig. 4: einen Querschnitt durch eine alternative Heizvorrichtung mit vier Heizkörpern und einer zusätzlichen Innenverzahnung des Dampfrohres;
- Fig. 5u.6: zwei unterschiedliche Heizvorrichtungen mit im Querschnitt rechteckigen flüssigkeits-führenden Rohren;
- Fig. 7: eine Ausgestaltung mit bogenförmigen konkaven Kontaktflächen des wasserführenden Rohres und im Querschnitt kreisrunden Rohrheizkörpern;
- Fig. 8u.9: der Fig. 7 entsprechende Ausgestaltungen allerdings mit abgeflachten Rohrheizkörpern;

- Fig.10u.11: Ausgestaltungen von erfindungsgemäßen Heiz-systemen mit konkaven Kontaktflächen, die allerdings durch (stumpf)winklig zueinander gerichtete ebene Kontaktflächen Bereiche gebildet sind.

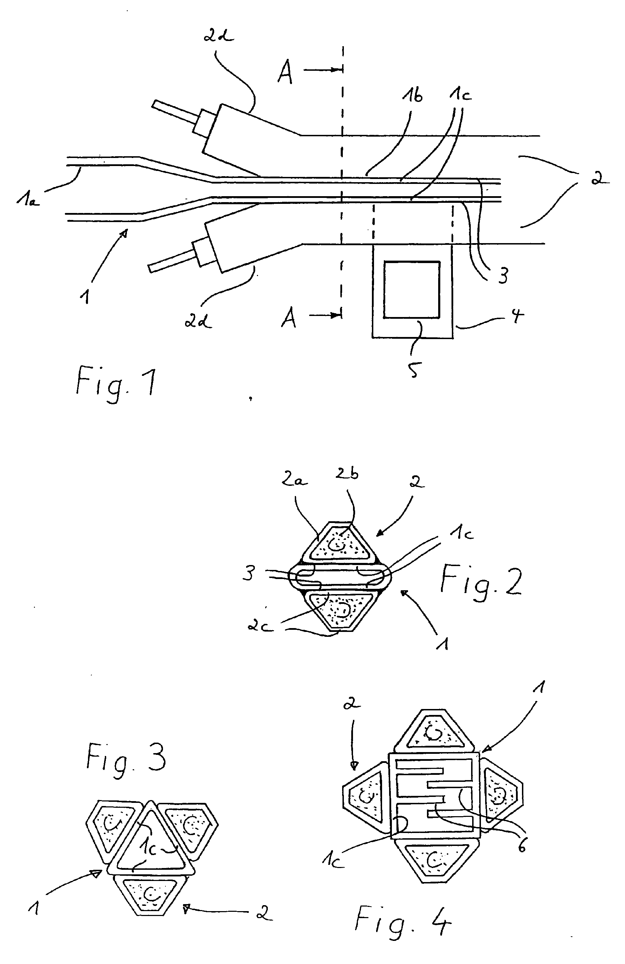

Figuren 1 und 2 zeigen eine erfindungsgemäße Heizvorrichtung mit einem Dampfrohr 1 aus Aluminiumlegierung, das an seinen beiden Enden einen kreisförmigen Querschnitt 1a aufweist, während es im mittleren Bereich 1b zu einem Flachrohr mit zwei im wesentlichen ebenen, parallelen Seitenwänden 1c verformt ist. Beidseitig ist auf diese ebenen Seitenwände 1c ein Heizkörper 2 mit Mantel 2a und Heizleiter 2b mit in diesem Bereich trapezförmigem Querschnitt unter Bildung im wesentlichen ebener Kontaktflächen 3 aufgelötet, wobei hier jeweils die längere der beiden Grundseiten 2c der Trapeze mit den flachen Seitenwänden 1c des Dampfrohres 1 verlötet ist. Die Heizkörper 2 sind an ihren beiden Enden 2d abgewinkelt und ragen hier frei in den Raum, um die elektrischen Anschlüsse ohne weiteres anbringen zu können. Über die elektrischen Anschlüsse sind die Heizkörper 2 in Reihe geschaltet. Denkbar wäre aber auch eine Parallelschaltung oder eine Beschaltung, die es erlaubt, zwischen Einzelschaltung, Reihenschaltung und Parallelschaltung zu wechseln, um so unterschiedliche Leistungsstufen zu erhalten. An den Enden 1a ist der ursprünglich kreisförmige Querschnitt der Heizkörper 2 noch erhalten. Im verlöteten Bereich 1b der Heizkörper 2 ist eine Lasche 4 für einen Temperaturregler 5 angelötet.

Figur 3 zeigt in Querschnitt ein Dampfrohr 1, dessen Querschnitt im wesentlichen die Form eines gleichseitigen Dreiecks aufweist. Jedes der drei geraden Seitenteile 1c ist dabei mit einem wiederum im Querschnitt trapezförmigen Heizkörper 2 verlötet. Die erfindungsgemäße Heizvorrichtung mit Dampfrohr 2 kann auch als Strangpressprofil hergestellt sein.

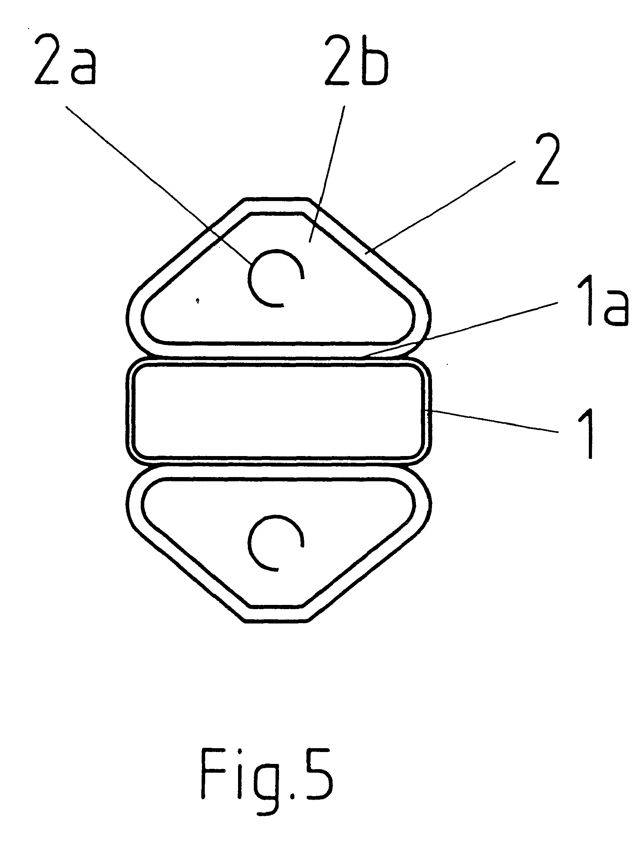

Figur 4 zeigt ein Dampfrohr 1, dessen Querschnitt im wesentlichen quadratisch ist. Jede der vier geraden Seitenwände 1c ist mit einem Heizkörper 2 verlötet. Auch hier kann das Dampfrohr 1 nur an zwei einander gegenüberliegenden Seiten mit je einem Heizkörper 2 verlötet sein. Weiterhin erhöhen hier Zwischenwandungen 6 des Dampfrohres 1 die Wärmeabgabefläche zum zu erhitzenden Medium. Zur Realisierung der Zwischenwandungen 6 ist das Dampfrohr 1 als Strangpressprofil ausgebildet.

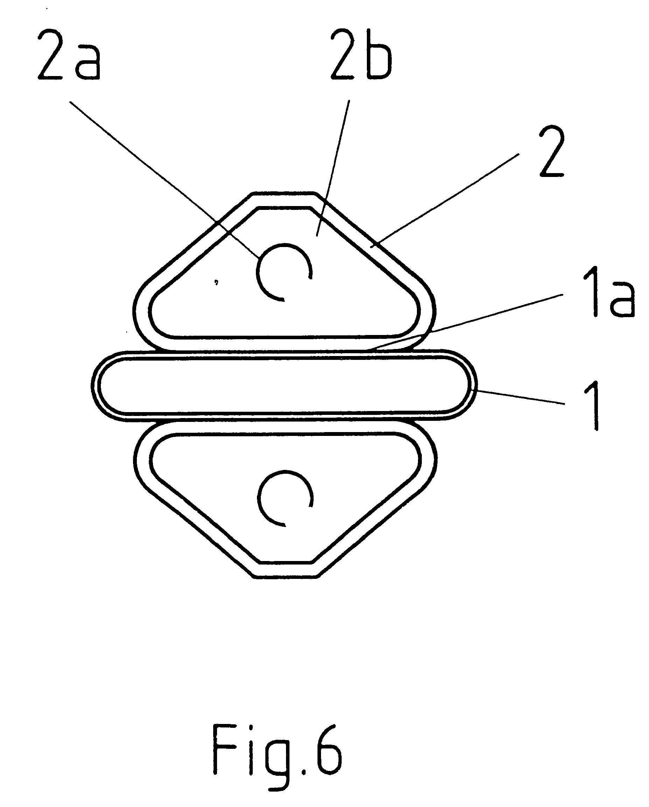

Die Figuren 5 und 6 zeigen etwa im Maßstab 1:5 Querschnitte von zwei erfindungsgemäßen Heizvorrichtungen.

Während bei den Ausgestaltungen der Figuren 5 und 6 der beheizte Umfangsbereich jeweils bei 30 mm bei einem Gesamtumfang von ca. 38 mm und damit das Verhältnis des beheizten Umfanges zu Gesamtumfang bei etwa 0,8 liegt, liegt das Verhältnis vom beheizten Umfang in mm zu dem Querschnitt in mm² bei der Ausgestaltung der Figur 5 bei 0,52, bei der Ausgestaltung der Figur 6 aber bei 0,78.

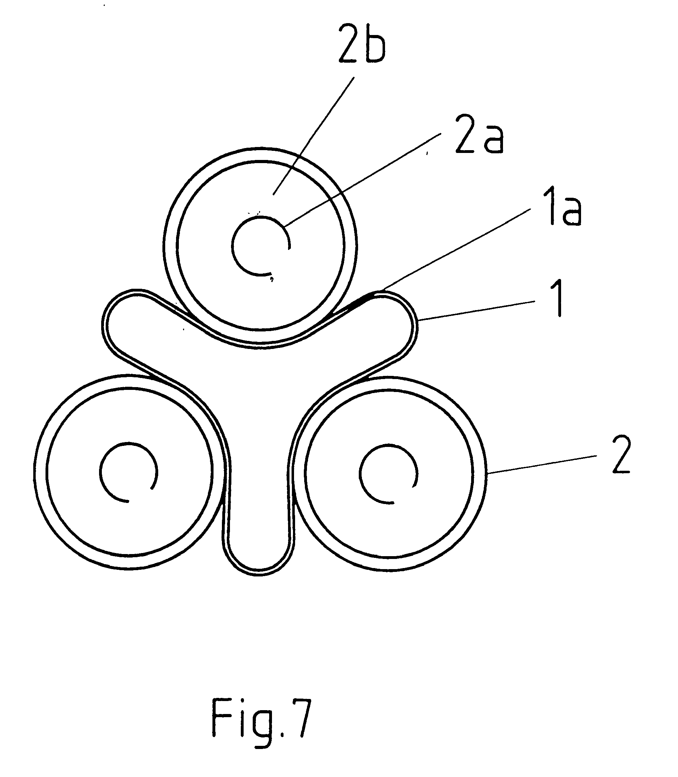

Bei der Ausgestaltung der Figur 7 weist die erfindungsgemäße Heizvorrichtung ein flüssigkeitsführendes Rohr 1 und drei Rohrheizkörper 2 mit kreisförmigem Querschnitt auf. Kontaktflächen 1a des flüssigkeitsführenden Rohres 1 sind bogenförmig konkav ausgebildet, wobei der Krümmungsradius der Kontaktflächen 1a dem Krümmungsradius der Heizrohre 2 entspricht.

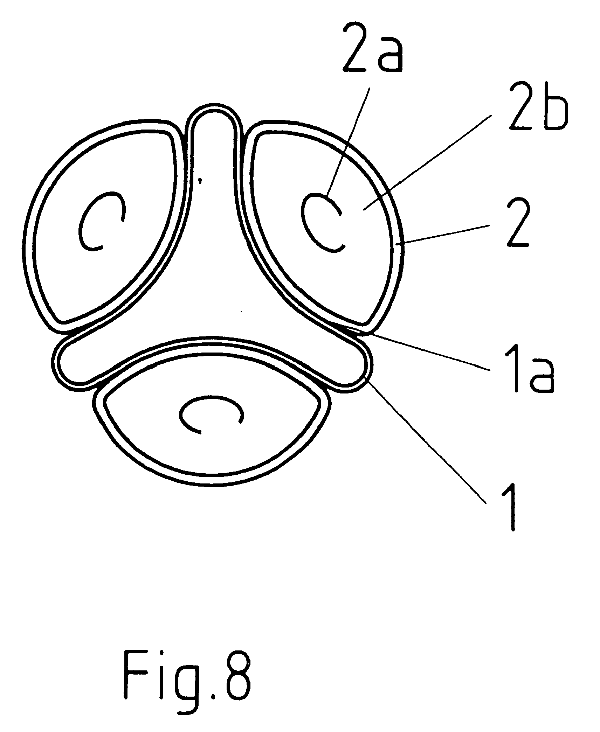

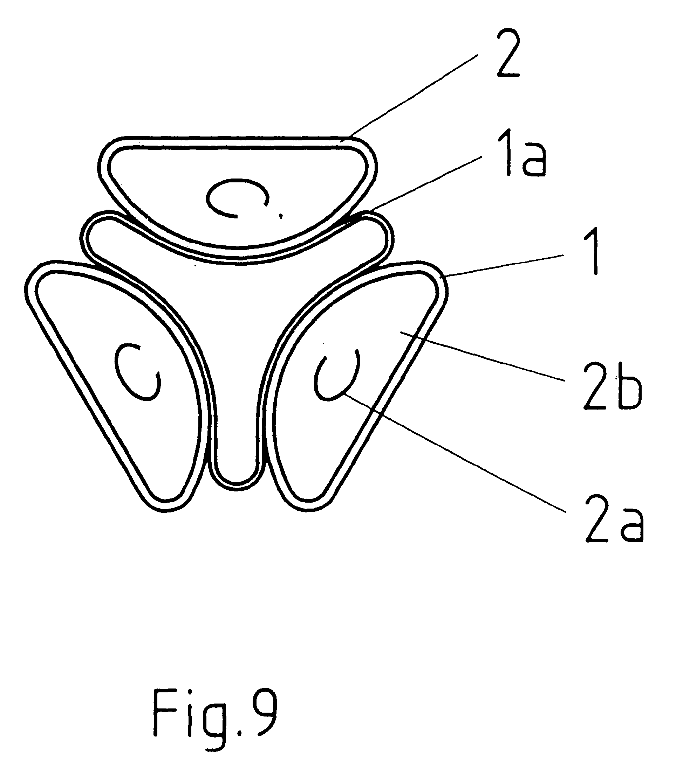

Gleiches gilt grundsätzlich für die Ausgestaltung der Figuren 8 und 9, bei denen allerdings die Heizkörper 2 nicht im Querschnittkreis rund ausgebildet sind, sondern abgeflacht sind, wobei bei der Ausgestaltung der Figur 8 die Abflachung zum Rohr 1 hin gegeben ist, während bei der Ausgestaltung der Figur 9 die vom Rohr 1 abgewandte nach außen gerichtete Seite der Heizkörper 2 abgeflacht ist. Der Krümmungsradius der Kontaktfläche 1a entspricht dabei dem Radius des ursprünglichen unverformten Rohres 1. Mit 2a ist jeweils die Heizwendel im Heizkörper 2 bezeichnet und mit 2b die isolierende Einbettmasse.

Bei der Ausgestaltung der Figur 8 ergibt sich beispielsweise ein Verhältnis vom beheizten Umfang zum gesamten Umfang des Rohres 1 bei etwa 0,74; Das Verhältnis vom beheizten Umfang in mm zum Querschnitt in mm² liegt bei 0,7.

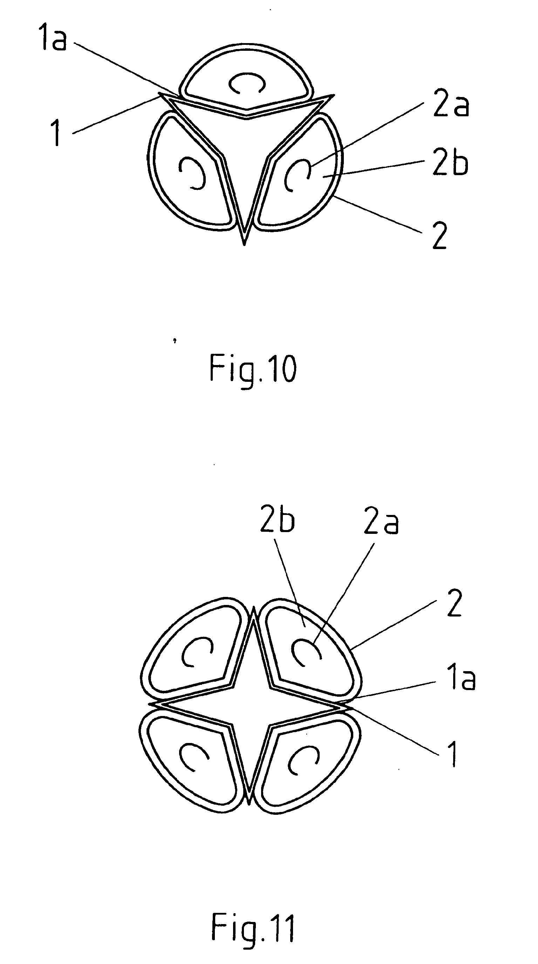

Die Ausgestaltungen der Figuren 10 und 11 zeigen ebenfalls Rohrheizkörper mit konkaver Außenwandung; diese ist nicht stetig bogenförmig ausgebildet sondern unter einem stumpfen Winkel aneinanderstoßende ebene Wandungsbereiche des Rohres 1. Auch hierdurch kann ein recht großes Verhältnis von beheiztem Umfang zu Querschnitt (in mm bzw. in mm²) erreicht werden. Bei der Ausgestaltung der Figur 10 sind drei Rohrheizkörper 2 vorhanden, während bei der Figur 11 vier Rohrheizkörper vorgesehen sind, die jeweils beide an einem Durchflussrohr 1 anliegend und in diesem Wärme übertragen.

## Patentansprüche

1. Vorrichtung zum Erhitzen einer Flüssigkeit mit mindestens einem flüssigkeitsführendem Rohr und einer gut wärmeleitend mit diesem verbundenen elektrischen Heizeinrichtung, **dadurch gekennzeichnet, dass** die Heizeinrichtung mindestens zwei Heizkörper aufweist, dass die Heizkörper Rohrheizkörper (2) sind und dass die Rohrheizkörper (2) in gut wärmeleitender Verbindung mit mindestens einem flüssigkeitsführenden Rohr (1) stehen.

2. Vorrichtung nach Anspruch 1, **dadurch gekennzeichnet, dass** die Heizkörper (2) und das Dampfrohr (1) Kontaktflächen mit einander angepassten Konturen aufweisen.

3. Vorrichtung nach einem der Ansprüche 1 oder 2, **dadurch gekennzeichnet, dass** die Kontaktflächen (3) von Heizkörpern (2) und Rohr (1) im wesentlichen eben ausgebildet sind.

4. Vorrichtung nach Anspruch 1 oder 2, **dadurch gekennzeichnet, dass** die Kontaktflächen des mindestens einen Rohrs (1) konkav und die Kontaktflächen der Heizkörper°(2) entsprechend konvex ausgebildet sind.

5. Vorrichtung nach einem der vorangehenden Ansprüche, **dadurch gekennzeichnet, dass** die wärmeleitenden Verbindungen Lötverbindungen sind.

6. Vorrichtung nach einem der vorangehenden Ansprüche, **dadurch gekennzeichnet, dass** mindestens zwei Heizkörper (2) gemeinsam mit einem Rohr (1) in direkter Verbindung stehen.

7. Vorrichtung nach Anspruch 6, **dadurch gekennzeichnet, dass** das Rohr (1) zumindest im Bereich der Kontaktfläche (3) als Flachrohr ausgebildet ist.

8. Vorrichtung nach einem der Ansprüche 1 bis 5, **dadurch gekennzeichnet, dass** das Rohr (1) bei einer Verwendung von zwei oder drei Heizkörpern (2) zumindest im Bereich der Kontaktflächen (3) einen dreieckförmigen Querschnitt aufweist.

9. Vorrichtung nach einem der Ansprüche 1 bis 5, **dadurch gekennzeichnet, dass** das Rohr (1) bei einer Verwendung von zwei, drei oder vier Heizkörpern (2) zumindest im Bereich der Kontaktflächen (3) einen rechteckförmigen Querschnitt aufweist.

10. Vorrichtung nach einem der vorangehenden Ansprüche, **dadurch gekennzeichnet, dass** das Rohr (1) zumindest im Bereich der Kontaktflächen (3) eine durch Zwischenwandungen gebildete vergrößerte Wärmeabgabefläche aufweist.

11. Vorrichtung nach einem der vorangehenden Ansprüche, **dadurch gekennzeichnet, dass** die Heizkörper (2) zumindest im Bereich der Kontaktflächen (3) einen trapezförmigen Querschnitt aufweisen.

12. Vorrichtung nach Anspruch 11, **dadurch gekennzeichnet, dass** die Heizkörper (2) über die längere der beiden Grundlinien des trapezförmigen Querschnitts mit dem Dampfrohr (1) verbunden sind.

13. Vorrichtung nach einem der vorangehenden Ansprüche, **dadurch gekennzeichnet, dass** das Rohr (1) als Strangpressprofil ausgebildet ist.

14. Vorrichtung nach Anspruch 1, **dadurch gekennzeichnet, dass** das Rohr (1) mit den mindestens zwei Heizkörpern (2) als einstückiges Strangpressprofil ausgebildet ist.

15. Vorrichtung nach Anspruch 14, **dadurch gekennzeichnet, dass** ein lichter Querschnitt der die Mäntel (2a) der Heizkörper (2) bildenden Heizrohre (2a) nach dem Einbringen von Heizleitern (2b) und einer diese umgebenden Isoliermasse verringerbar ist.

16. Vorrichtung nach einem der vorangehenden Ansprüche, **dadurch gekennzeichnet, dass** vor dem Rohr (1) eine Filtereinrichtung zur Verminderung eines Kalkgehalts des zur Dampferzeugung eingesetzten Wasser vorgesehen ist.

17. Vorrichtung nach einem der vorangehenden Ansprüche, **dadurch gekennzeichnet, dass** das Rohr (1) an seiner Innenseite eine Kalkablagerungen vermindernde Beschichtung aufweist.

18. Vorrichtung nach Anspruch 17, **dadurch gekennzeichnet, dass** die Beschichtung aus Polyfluortetraethylen (PTFE) besteht.

19. Vorrichtung nach einem der vorangehenden Ansprüche, **dadurch gekennzeichnet, dass** das Dampfrohr (1) und/oder die Heizkörperwandungen aus Aluminium oder einer Aluminiumlegierung bestehen.

20. Vorrichtung nach einem der vorangehenden Ansprüche, **dadurch gekennzeichnet, dass** eine Lasche (4) aus gut wärmeleitendem Material vorgesehen ist.

21. Vorrichtung nach Anspruch 20, **dadurch gekennzeichnet, dass** die Lasche (4) aus Aluminium oder einer Aluminiumlegierung besteht.

22. Vorrichtung nach Anspruch 10 oder 21, **dadurch gekennzeichnet, dass** die Lasche (4) im Bereich der Kontaktflächen (3) an die Heizkörper (2) und/oder das Dampfrohr (1) angelötet oder angeschweißt ist.

23. Vorrichtung nach einem der Ansprüche 20 bis 22, **dadurch gekennzeichnet, dass** an der Lasche (4) ein Temperaturregler (5) befestigt ist.

24. Vorrichtung nach einem der vorangehenden Ansprüche, **dadurch gekennzeichnet, dass** die Heizkörper (2) in Reihe geschaltet sind.

25. Vorrichtung nach einem der vorangehenden Ansprüche, **dadurch gekennzeichnet, dass** die Heizkörper (2) parallel geschaltet sind.

26. Vorrichtung nach einem der vorangehenden Ansprüche, **dadurch gekennzeichnet, dass** Schaltmittel zum Umschalten zwischen einer Einzelschaltung, einer Reihenschaltung und einer Parallelschaltung der Heizkörper (2) vorhanden sind.

27. Vorrichtung nach einem der vorangehenden Ansprüche, **dadurch gekennzeichnet, dass** die Heizkörper (2) an mindestens einem ihrer Enden (2d) abgewinkelt sind und von der jeweiligen Kontaktfläche (3) weg frei in den Raum ragen.

28. Vorrichtung nach einem der vorangehenden Ansprüche, **dadurch gekennzeichnet, dass** das Verhältnis vom beheizten Umfang zum gesamten Umfang des flüssigkeitsführenden Rohres (1) größer als 0,6 ist.

29. Kaffeemaschine mit einer zum Erhitzen einer Flüssigkeit mit mindestens einem flüssigkeitsführendem Rohr und einer gut wärmeleitend mit diesem verbundenen elektrischen Heizeinrichtung, **dadurch gekennzeichnet, dass** die Heizeinrichtung mindestens zwei Heizkörper aufweist, dass die Heizkörper Rohrheizkörper (2) sind und dass die Rohrheizkörper (2) in gut wärmeleitender Verbindung mit mindestens einem flüssigkeitsführenden Rohr (1) stehen.

30. Kaffeemaschine nach Anspruch 1, **gekennzeichnet durch** ein oder mehrere Merkmale der Ansprüche 2 bis 28.
